# EUROPEAN PATENT APPLICATION

(11) **EP 4 693 875 A1**
(43) Date of publication of application: **11.02.2026**
(21) Application number: 24810767.4
(22) Date of filing: 15.04.2024
(51) Int. Cl.: H02M 7/12

(54) **CONVERTER DEVICE AND MOTOR DRIVE DEVICE EQUIPPED WITH SAME**

(30) Priority: 19.05.2023 JP 2023083203
(71) Applicant: MITSUBISHI HEAVY INDUSTRIES THERMAL SYSTEMS, LTD., Tokyo 100-8332 (JP)
(72) Inventor: KUHARA, Masakazu, Tokyo 100-8332 (JP); SERIZAWA, Kazuhiko, Tokyo 100-8332 (JP); SUMITO, Kiyotaka, Tokyo 100-8332 (JP); KOMIYA, Shinichi, Tokyo 100-8332 (JP)
(74) Representative: Cabinet Beau de Loménie
(86) International application number: PCT/JP2024/015045
(87) International publication number: WO 2024/241759

(57) **Abstract**

Provided is a converter device in which a rush current flowing to a capacitor when a changeover switch element is turned on can be suppressed. A converter device (10) comprises: a bridge rectification circuit (5) comprising an AC power supply (2), a first arm part (arm 1) provided with a first switching element (Tr1), and a second arm part (arm 2) provided with a second switching element (Tr2); a plurality of series-connected capacitors (C1, C2) connected in parallel with the bridge rectification circuit (5); a changeover switch element (SW1) for switching the path of current flowing through the bridge rectification circuit (5) and the plurality of capacitors; and a control unit (24) for controlling on/off of the first switching element (Tr1)and the second switching element (Tr2) on the basis of a boost control signal generated using a carrier frequency having a frequency higher than the frequency of the AC voltage of the AC power supply (2), thereby boosting the output voltage and then switching the changeover switch element on.

## Description

### Technical Field

The present disclosure relates to a converter device and a motor drive device equipped with the same.

### Background Art

In the related art, rectification control and boost control using a bridge circuit composed of power transistors have been widely used.

For example, PTL 1 discloses a configuration of an inverter device including a bridge circuit including diodes or capacitors that supply power from an alternating current (AC) power supply. This inverter device converts an AC voltage output from an AC power supply into a direct current (DC) voltage, controls on/off of a relay element that switches a conduction state of the bridge circuit in accordance with a frequency of the converted DC voltage, and switches between two rectification modes of a bridge rectification mode and a voltage doubling rectification mode.

### Citation List

### Patent Literature

[PTL 1] Japanese Unexamined Patent Application Publication No. 61-112575

### Summary of Invention

### Technical Problem

In the bridge circuit disclosed in PTL 1, when on/off of the switching element (relay element) is switched while the bridge circuit is in operation, depending on a switching timing, for example, in a case where an amount of power stored in the capacitor included in the bridge circuit is small, there is a concern that an excessive current may flow through the capacitor, and an electronic component included in the bridge circuit may be damaged. Even in a case where the electronic component is not damaged, there is a concern that an excessive current may flow, thereby reducing durability and a lifetime of each electronic component.

The present disclosure has been made in view of such circumstances, and an object of the present disclosure is to provide a converter device that can suppress an inrush current flowing to a capacitor when a changeover switch element is turned on, and a motor drive device equipped with the same.

### Solution to Problem

An aspect of the present disclosure relates to a converter device including: a bridge rectification circuit that rectifies AC power supplied from an AC power supply and that includes a first arm part including a first switching element and a rectification element or a third switching element connected in series with the first switching element, and a second arm part including a second switching element and a rectification element or a fourth switching element connected in series with the second switching element; a plurality of capacitors connected in parallel with an output side of the bridge rectification circuit and connected in series with each other; a changeover switch element having a first terminal connected to a connection point between a plurality of the switching elements that are connected in series with each other or a connection point between the switching element and the rectification element that are connected in series with each other, and a second terminal connected to a midpoint between the plurality of capacitors; and a control unit that controls on/off of the changeover switch element to switch between low-voltage control of outputting a low voltage and high-voltage control of outputting a high voltage, in which the control unit generates a boost control signal using a carrier frequency having a frequency higher than a frequency of an AC voltage of the AC power supply, controls on/off of the first switching element and the second switching element based on the generated boost control signal to boost an inter-terminal voltage between the capacitors, and then switches on the changeover switch element.

Another aspect of the present disclosure relates to a converter device including: a bridge rectification circuit that rectifies AC power supplied from an AC power supply and that includes a first arm part including a first switching element and a rectification element or a third switching element connected in series with the first switching element, and a second arm part including a third switching element and a rectification element or a fourth switching element connected in series with the third switching element; a plurality of capacitors connected in parallel with an output side of the bridge rectification circuit and are connected in series with each other; a changeover switch element having a first terminal connected to a connection point between a plurality of the switching elements that are connected in series with each other or a connection point between the switching element and the rectification element that are connected in series with each other, and a second terminal connected to a midpoint between the plurality of capacitors; and a control unit that controls on/off of the changeover switch element to switch between low-voltage control of outputting a low voltage and high-voltage control of outputting a high voltage, in which, when the control unit switches from the low-voltage control to the high-voltage control, the control unit performs pulse width modulation (PWM) control of the changeover switch element in accordance with a duty ratio that asymptotically increases, and then switches on the changeover switch element.

Still another aspect of the present disclosure relates to a motor drive device including: the converter device described above.

### Advantageous Effects of Invention

According to the present disclosure, there is an effect that it is possible to suppress damage to or deterioration of the electronic component included in the converter device due to a lifetime and to safely drive the converter device.

### Brief Description of Drawings

FIG. 1 is a diagram showing a configuration of a motor drive device according to an embodiment of the present disclosure.
FIG. 2 is a diagram showing a path of a current in a section in which a voltage output from an AC power supply has a positive polarity in FIG. 1.
FIG. 3 is a diagram showing a path of a current in a section in which the voltage output from the AC power supply has a negative polarity in FIG. 1.
FIG. 4 is a timing chart showing each waveform in a case where PAM control is executed when switching from low-voltage control to high-voltage control according to the embodiment of the present disclosure.
FIG. 5 is a comparison diagram of an inrush current generated when a changeover switch element is turned on in a converter device according to an embodiment of the present disclosure.
FIG. 6 is a diagram showing a configuration of the motor drive device in a case where a bridge rectification circuit is changed to a full bridgeless circuit in FIG. 1.
FIG. 7 is a timing chart showing each waveform in a case where the PAM control is executed when switching from the low-voltage control to the high-voltage control in the motor drive device of FIG. 6.
FIG. 8 is a diagram showing a configuration of the motor drive device in a case where the changeover switch element is changed to a power transistor in FIG. 1.
FIG. 9 is a diagram showing that a duty ratio of a PWM signal of the changeover switch element of FIG. 8 asymptotically increases.
FIG. 10 is a comparison diagram of the inrush current generated when the changeover switch element is turned on in the converter device according to the embodiment of the present disclosure.

### Description of Embodiments

### [First Embodiment]

Hereinafter, a converter device and a motor drive device equipped with the same according to a first embodiment of the present disclosure will be described with reference to the drawings.

Hereinafter, the embodiment will be described with reference to the drawings.

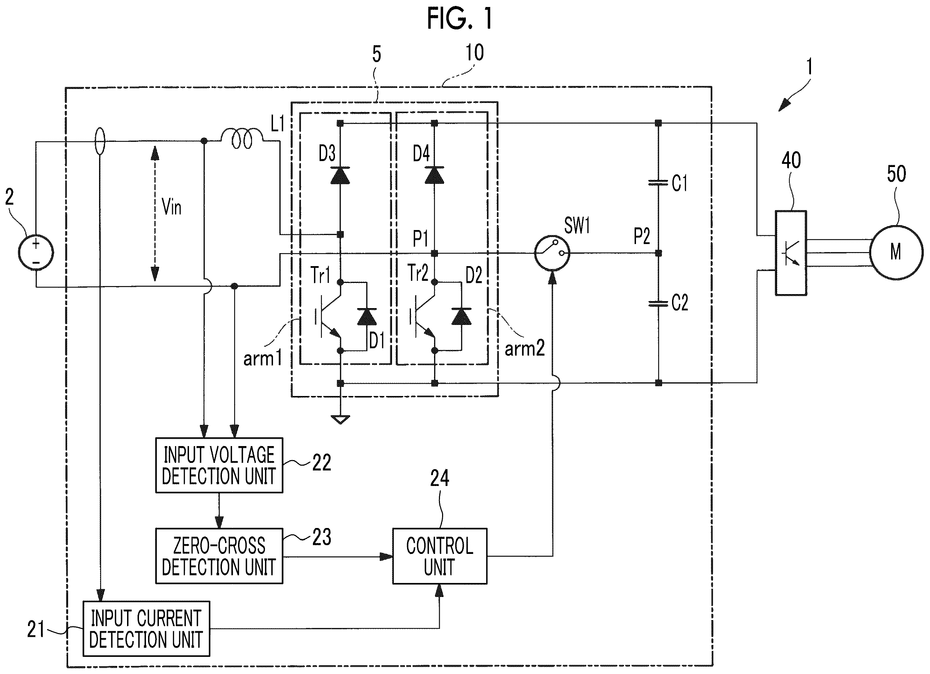

FIG. 1 is a diagram showing a configuration of a motor drive device 1 according to the embodiment of the present invention. As shown in FIG. 1, the motor drive device 1 includes a converter device 10, an inverter device 40, an AC power supply 2, and a motor 50. The converter device 10 includes a bridge rectification circuit 5, an input current detection unit 21, an input voltage detection unit 22, a zero-cross detection unit 23, and a control unit 24.

The motor drive device 1 is a device that converts AC power from an AC power supply 2 into DC power by the converter device 10, converts the DC power into three-phase AC power by the inverter device 40, and outputs the three-phase AC power to the motor 50.

The AC power supply 2 supplies, for example, single-phase AC power to the converter device 10. The AC power supply 2 supplies, for example, a power supply voltage and an input current to the converter device 10.

The converter device 10 converts the AC power into the DC power and outputs the DC power to the inverter device 40.

The inverter device 40 converts, for example, the DC power into the three-phase AC power and outputs the three-phase AC power to the motor 50.

The motor 50 is rotationally driven by the three-phase AC power supplied from the inverter device 40. The motor 50 is, for example, a compressor motor used in an air conditioner.

The converter device 10 includes, for example, a power factor correction (PFC) circuit. The converter device 10 performs, for example, synchronous rectification control of rectifying the AC power by performing switching control of switching elements Tr1 and Tr2 in accordance with the polarity of the AC voltage output from the AC power supply 2, and PAM control of boosting an inter-terminal voltage between capacitors C1 and C2 (output voltage of the converter device 10).

As shown in FIG. 1, the converter device 10 includes the bridge rectification circuit 5, a reactor L1, the capacitors C1 and C2, a changeover switch element SW1, and the control unit 24. The converter device 10 includes, for example, various detection units such as the input current detection unit 21, the input voltage detection unit 22, and the zero-cross detection unit 23.

The bridge rectification circuit 5 includes, for example, a first arm part arm1 and a second arm part arm2 connected in parallel with the first arm part arm1.

The first arm part arm1 includes a switching element (first switching element) Tr1, a diode D1 connected in parallel with the switching element Tr1, and a diode D3 connected in series with the switching element Tr1. A source of the switching element Tr1 is connected to an anode of the diode D3 and is connected to a first terminal of the AC power supply 2 via the reactor L1.

The second arm part arm2 includes a switching element (second switching element) Tr2, a diode D2 connected in parallel with the switching element Tr2, and a diode D4 connected in series with the switching element Tr2. A source of the switching element Tr2 is connected to an anode of the diode D4. A source of the switching element Tr2 is connected to a second terminal of the AC power supply 2.

On/off of the switching elements Tr1 and Tr2 is controlled by a PWM signal from the control unit 24 as will be described later. The switching elements Tr1 and Tr2 are, for example, metal-oxide-semiconductor field-effect transistors (MOSFETs), and the electrical characteristics of the respective switching elements are the same. By using the switching elements Tr1 and Tr2, the switching of the converter device 10 can be performed at a high speed, and, by causing a current to flow through the MOSFET having a smaller voltage drop, the synchronous rectification control can be performed, so that it is possible to reduce conduction loss of the circuit.

The MOSFET is preferably, for example, a super-junction MOSFET of a high speed type having a small on-resistance. Alternatively, a next-generation power MOSFET using gallium oxide, silicon carbide (SiC), or the like may be used.

The electrical characteristics not only refer to insulation, dielectric properties, and chargeability, but also refer to characteristics related to specifications of the electronic component, such as heat resistance, a range of an applicable voltage, and a range of an applicable current of the electronic component when the electronic component is used.

The reactor L1 is provided between the AC power supply 2 and the bridge rectification circuit 5. The reactor L1 stores the power supplied from the AC power supply 2 as energy, and further releases the energy to boost the voltage.

The capacitors C1 and C2 smooth the voltage rectified through the diode D3 or the diode D4 to generate a DC voltage. A plurality of capacitors C1 and C2 are connected in parallel with the output side of the bridge rectification circuit 5 and are connected in series with each other. The capacitor C1 has a positive electrode side connected to cathodes of the diodes D3 and D4, and a negative electrode side connected to a positive electrode side of the capacitor C2. The capacitor C2 has a positive electrode side connected to a negative electrode side of the capacitor C1, and a negative electrode side connected to anodes of the diodes D1 and D2.

Here, the capacitors C1 and C2 are capacitors that smooth the DC power output by the bridge rectification circuit 5. The capacitors C1 and C2 suppress a fluctuation in a voltage value of the DC voltage. The capacitors C1 and C2 are, for example, electrolytic capacitors.

The changeover switch element SW1 has a first terminal connected to a connection point P1 between the switching element Tr2 and the diode D4 that are connected in series with each other, and a second terminal connected to a midpoint P2 of the changeover switch element SW1 located between the capacitors C1 and C2 that are connected in series with each other. On/off of the changeover switch element SW1 is controlled by inputting a control signal from the control unit 24. Examples of the changeover switch element SW1 include a power transistor such as a relay element or a

### MOSFET.

The input current detection unit 21 detects a current value of an input current supplied from the AC power supply 2 to the converter device 10 for each period that is sufficiently shorter than a period of the AC voltage output by the AC power supply 2. For example, the input current detection unit 21 includes a current sensor provided between the AC power supply 2 and the converter device 10, and detects a current value of an input current (an example of a physical quantity related to the input current) read by the current sensor. For example, the input current detection unit 21 may include a shunt resistor provided between the AC power supply 2 and the converter device 10, and detect the current value by dividing a potential difference (an example of the physical quantity related to the input current) between both ends of the shunt resistor by a resistance value.

The input current detection unit 21 outputs the detected current value of the input current to the control unit 24.

The input voltage detection unit 22 detects a voltage value of the input current supplied from the AC power supply 2 to the converter device 10 for each period that is sufficiently shorter than a period of the AC voltage output by the AC power supply 2. For example, the input voltage detection unit 22 includes a voltage sensor provided between the AC power supply 2 and the converter device 10, and detects a voltage value of an input voltage (an example of the physical quantity related to the input voltage) read by the voltage sensor.

The input voltage detection unit 22 outputs the detected voltage value of the input voltage to the zero-cross detection unit 23.

The zero-cross detection unit 23 has a function of determining whether or not the polarity of the value of the voltage of the AC power supply detected by the input voltage detection unit 22 has been switched (whether or not the voltage has reached a zero-cross point). The zero-cross detection unit 23 is a polarity detection unit that detects the polarity of the voltage of the AC power supply 2 to output a zero-cross signal to the control unit 24. For example, the zero-cross detection unit 23 outputs a signal of "1" to the control unit 24 during a period in which the voltage of the AC power supply 2 is positive, and outputs a signal of "0" to the control unit 24 during a period in which the voltage of the AC power supply 2 is negative.

For example, the control unit 24 is composed of a central processing unit (CPU), a random access memory (RAM), a read only memory (ROM), and a computer-readable storage medium. A series of pieces of processing for achieving various functions is stored in, for example, a storage medium or the like in a program format, and the CPU reads out the program to the RAM or the like, and executes processing for information processing and calculation to achieve various functions. The program may be applied in a form of being, for example, installed in the ROM or another storage medium in advance, provided in a state of being stored in the computer-readable storage medium, or distributed via wired or wireless communication means. The computer-readable storage medium is a magnetic disk, a magneto-optical disk, a CD-ROM, a DVD-ROM, a semiconductor memory, or the like.

The control unit 24 receives the current value of the input current from the input current detection unit 21. The control unit 24 receives the zero-cross signal from the zero-cross detection unit 23. Then, the control unit 24 performs the on/off control of each of the switching elements Tr1 and Tr2 and the on/off control of the changeover switch element SW1, based on the signals received from the input current detection unit 21 and the zero-cross detection unit 23.

Specifically, in low-voltage control of outputting a low voltage, the control unit 24 controls the changeover switch element SW1 to be turned off, and switches on/off of the switching elements Tr1 and Tr2 for each half period as described later. The control unit 24 performs the low-voltage control in a case where a motor rotation speed is equal to or less than a predetermined rotation speed.

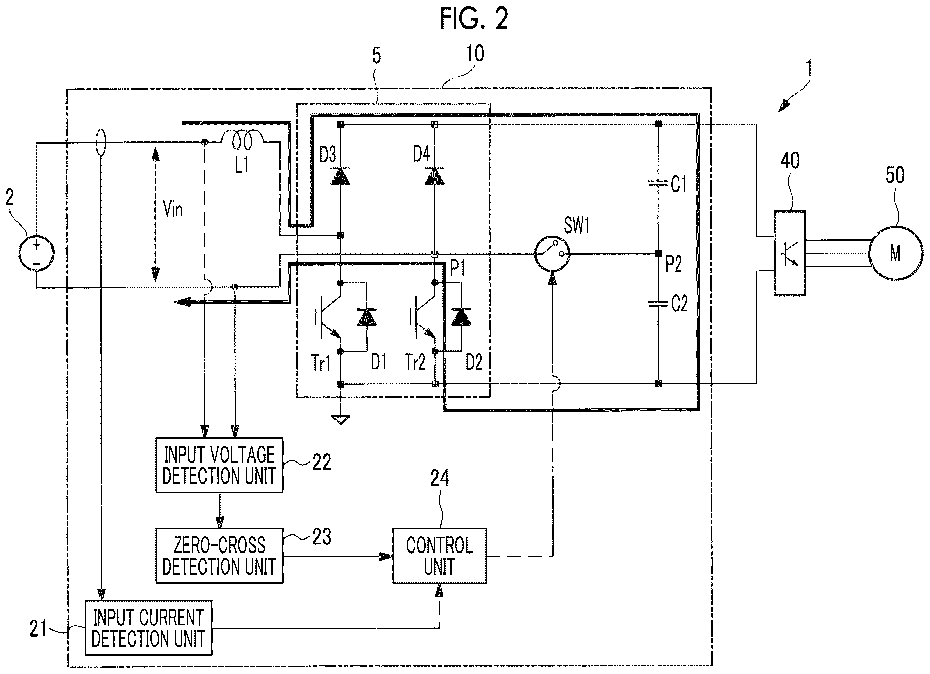

For example, the control unit 24 controls the switching element Tr1 to be turned off and the switching element Tr2 to be turned on during a half period in which the power is supplied from the positive electrode side of the AC power supply 2. Accordingly, as shown by a thick line in FIG. 2, the current flows from the first terminal of the AC power supply 2 to the reactor L1, the diode D3, the capacitor C1, the capacitor C2, the switching element Tr2, and the second terminal of the AC power supply 2, and thus the capacitors C1 and C2 are charged.

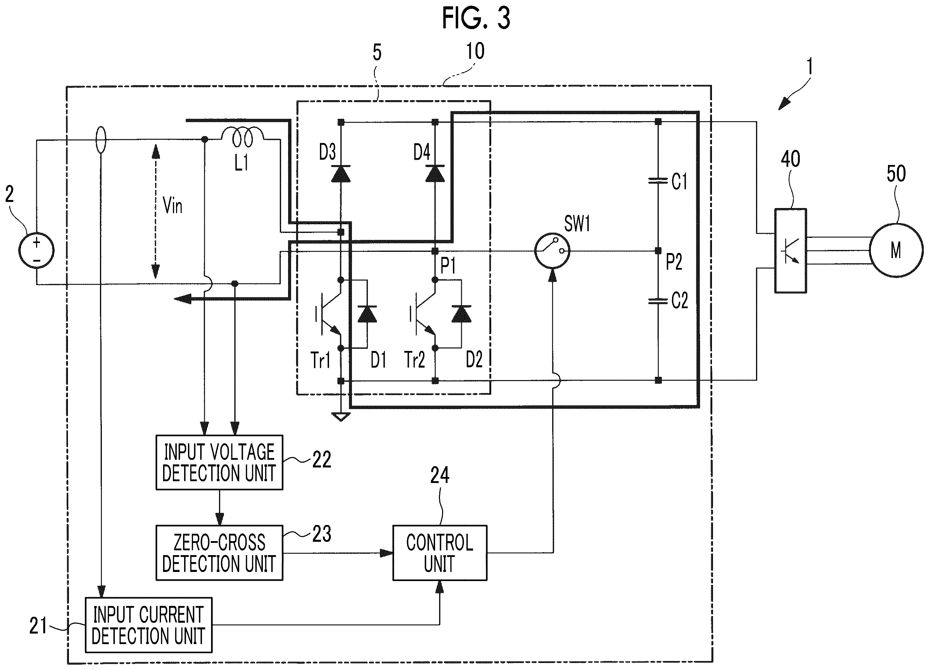

The control unit 24 controls the switching element Tr1 to be turned on and the switching element Tr2 to be turned off during a half period in which the power is supplied from the negative electrode side of the AC power supply 2. Accordingly, as shown by a thick line in FIG. 3, the current flows from the second terminal of the AC power supply 2 to the diode D4, the capacitor C1, the capacitor C2, the switching element Tr1, the reactor L1, and the first terminal of the AC power supply 2, and thus the capacitors C1 and C2 are charged.

In high-voltage control of outputting a high voltage, the control unit 24 controls the changeover switch element SW1 to be turned on, and switches on/off of the switching element Tr1 for each half period as described later. The switching element Tr2 is always turned off. The control unit 24 performs the high-voltage control in a case where the motor rotation speed exceeds the predetermined rotation speed.

For example, the control unit 24 controls the switching element Tr1 to be turned off and the switching element Tr2 to be turned off during the half period in which the power is supplied from the positive electrode side of the AC power supply 2. In this way, the current flows from the first terminal of the AC power supply 2 to the reactor L1, the diode D3, the capacitor C1, the changeover switch element SW1, and the second terminal of the AC power supply 2, and thus the capacitor C1 is charged.

The control unit 24 controls the switching element Tr1 to be turned on and the switching element Tr2 to be turned off during the half period in which the power is supplied from the negative electrode side of the AC power supply 2. That is, the synchronous rectification control is executed during the half period in which the power is supplied from the negative electrode side of the AC power supply 2. In this way, the current flows from the second terminal of the AC power supply 2 to the changeover switch element SW1, the capacitor C2, the switching element Tr1, the reactor L1, and the first terminal of the AC power supply 2. The capacitor C2 is charged by this current. When the switching element Tr1 is turned off, diode rectification control is performed.

As described above, in the high-voltage control, the capacitor C1 is charged by the current flowing through the diode D3 during the half period in which the power is supplied from the positive electrode side of the AC power supply 2, and the capacitor C2 is charged by the current flowing through the diode D1 during the half period in which the power is supplied from the negative electrode side of the AC power supply 2. As a result, the DC voltage that is twice an input voltage Vin of the AC power supply 2 is generated as the inter-terminal voltage between the capacitors C1 and C2, and an output power is supplied to the inverter device.

As described above, the control unit 24 switches between the low-voltage control and the high-voltage control by switching on/off of the changeover switch element SW1 in accordance with the motor rotation speed. However, when the changeover switch element SW1 is switched on, in a case where the potential difference exists between the connection point P1 and the midpoint P2 located at both ends of the changeover switch element SW1, an inrush current flows into the electronic component included in the converter device 10 such as the capacitors C1 and C2 in an instant when the changeover switch element SW1 is turned on, and there is a concern that durability and the lifetime of each electronic component may be reduced.

Therefore, the present inventors have devised control for the converter device 10 of suppressing the inrush current when the changeover switch element SW1 is turned on by controlling the current flowing through the circuit of the converter device 10 before the changeover switch element SW1 is switched on, to asymptotically boost the inter-terminal voltage between the capacitors C1 and C2. Specifically, as described later, the control unit 24 performs the PAM control to boost the inter-terminal voltage between the capacitors C1 and C2, and then switches on the changeover switch element SW1.

Hereinafter, the PAM control when the changeover switch element SW1 is switched from off to on will be described.

The control unit 24 executes the PAM control by outputting the control signal for switching on/off of the switching elements Tr1 and Tr2 to each of the switching elements Tr1 and Tr2. Here, the PAM control performed by the control unit 24 need only use a PWM generation technique that generates the PAM control signal (boost control signal) in accordance with the input voltage. As the PWM generation technique, a known technique that generates a signal by comparing a reference voltage with a triangular wave need only be adopted as appropriate, and will not be described in detail here.

Specifically, when the PAM control is executed, the control unit 24 generates the PAM control signal using a carrier frequency having a frequency higher than a frequency of the AC voltage of the AC power supply 2. Then, the control unit 24 controls on/off of the switching elements Tr1 and Tr2 based on the generated PAM control signal, to boost the inter-terminal voltage between the capacitors C1 and C2.

Specifically, in a section in which the voltage output from the AC power supply 2 has a positive polarity, the control unit 24 turns off the switching element Tr1 and switches on/off of the switching element Tr2 a plurality of times at a predetermined carrier frequency. Here, a power factor correction current flows through the converter device 10 when the switching element Tr2 is turned on. In this case, the energy is stored in the reactor L1. Then, the energy stored in the reactor L1 is released to the capacitors C1 and C2, so that the inter-terminal voltage between the capacitors C1 and C2 is boosted, and the power factor is improved.

In a section in which the voltage output from the AC power supply 2 has a negative polarity, the control unit 24 turns off the switching element Tr2 and switches on/off of the switching element Tr1 a plurality of times at a predetermined carrier frequency. Here, a power factor correction current flows through the converter device 10 when the switching element Tr1 is turned on. In this case, the energy is stored in the reactor L1. Then, the energy stored in the reactor L1 is released to the capacitors C1 and C2, so that the inter-terminal voltage between the capacitors C1 and C2 is boosted, and the power factor is improved.

In this way, the control unit 24 generates the PAM control signal by using the carrier frequency having a frequency higher than the frequency of the AC voltage of the AC power supply 2, and executes the PAM control by switching the drive states of the switching elements Tr1 and Tr2 in accordance with the polarity of the voltage output from the AC power supply 2, based on the generated PAM control signal.

Then, when the inter-terminal voltage between the capacitors C1 and C2 has reached a predetermined voltage set in advance, the control unit 24 switches on the changeover switch element SW1. In this way, the PAM control is executed before the changeover switch element SW1 is switched on, to boost the inter-terminal voltage between the capacitors C1 and C2, and then the changeover switch element SW1 is switched on, so that it is possible to suppress the inrush current flowing to the capacitors C1 and C2.

### (Each Waveform in First Embodiment)

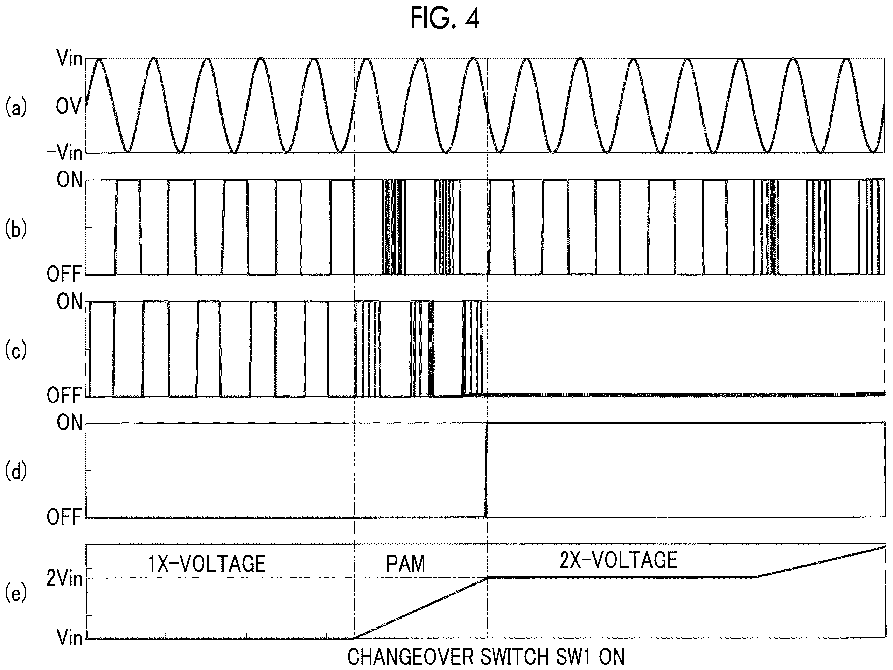

Next, FIG. 4 is a timing chart showing each waveform in a case where the PAM control is executed when switching from the low-voltage control to the high-voltage control. (a) of FIG. 4 is a waveform diagram showing the output voltage of the AC power supply 2. (b) of FIG. 4 is a waveform diagram showing the drive state of the switching element Tr1. (c) of FIG. 4 is a waveform diagram showing the drive state of the switching element Tr2. (d) of FIG. 4 is a waveform diagram showing the drive state of the changeover switch element SW1. (e) of FIG. 4 is a waveform diagram showing the output voltage of the converter device 10.

As described above, the control unit 24 performs the PAM control by alternately switching on/off of the switching elements Tr1 and Tr2, so that the input current output from the AC power supply 2 can be brought close to the period of the AC voltage output from the AC power supply 2, and the harmonic distortion can be made equal to or less than a desired distortion rate.

From (a) to (e) of FIG. 4, during a period in which the output voltage of the converter device 10 is driven at a 1x-voltage (low voltage), the control unit 24 alternately switches on/off of each of the switching elements Tr1 and Tr2 in accordance with the polarity of the input voltage, and executes the synchronous rectification control of rectifying the current in synchronization with the input voltage.

Next, before the execution of the high-voltage control of setting the inter-terminal voltage between the capacitors C1 and C2 to the DC voltage that is twice the input voltage Vin of the AC power supply 2, that is, during a period before switching on the changeover switch element SW1, the control unit 24 alternately switches on/off of the switching elements Tr1 and Tr2 to perform the PAM control. In this manner, the inter-terminal voltage between the capacitors C1 and C2 is asymptotically boosted, and the inter-terminal voltage between the capacitors C1 and C2 is brought close to the DC voltage that is twice the input voltage Vin of the AC power supply 2.

Next, when the inter-terminal voltage between the capacitors C1 and C2 has reached twice the input voltage Vin of the AC power supply 2, the control unit 24 turns off the switching elements Tr1 and Tr2, and switches on the changeover switch element SW1 to execute the high-voltage control. For example, a known method such as providing a voltage sensor or a detection resistor need only be adopted as appropriate for detecting the inter-terminal voltage between the capacitors C1 and C2.

Next, after the high-voltage control is executed, the control unit 24 turns off the switching element Tr2 and alternately switches on/off of the switching element Tr1 to execute the synchronous rectification control.

The control unit 24 may further execute the PAM control in a state where the changeover switch element SW1 is turned on, so that the output voltage of the converter device 10 may be further increased.

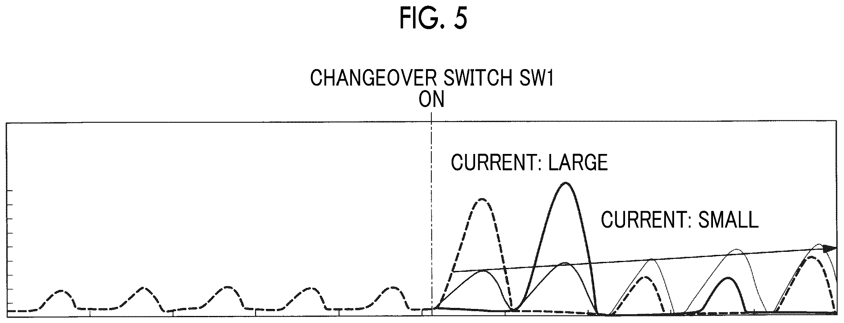

FIG. 5 is a comparison diagram of the inrush current generated when the changeover switch element SW1 is turned on in the converter device 10 described above. In FIG. 5, a thick line indicates the current flowing through the capacitor C1 in a case where the PAM control is not executed before the changeover switch element SW1 is switched on. A dashed line indicates the current flowing through the capacitor C2 in a case where the PAM control is not executed before the changeover switch element SW1 is switched on. A thin line is the current flowing through the capacitors C1 and C2 in a case where the PAM control is executed before the changeover switch element SW1 is switched on.

From FIG. 5, when the dashed line, the thick line, and the thin line immediately after the changeover switch element SW1 is turned on are compared, an amplitude of the current of the thin line is smaller than an amplitude of each current of the dashed line and the thick line. This is because the PAM control is executed before the changeover switch element SW1 is switched on, so that the generation of the inrush current is suppressed. That is, the PAM control is executed before the changeover switch element SW1 is switched on, to boost the inter-terminal voltage between the capacitors C1 and C2 in advance, so that it is possible to suppress the inrush current flowing to the capacitors C1 and C2 when the changeover switch element SW1 is turned on.

The amplitude of the second current represented by the dashed line and the thick line after the changeover switch element SW1 is turned on is temporarily reduced due to the influence of the inrush current. On the other hand, the amplitudes of the third and fourth currents of the thin line are not reduced and are stable since the influence of the inrush current is suppressed.

Therefore, by the control unit 24 executing the PAM control before switching from the low-voltage control to the high-voltage control, it is possible to suppress the inrush current when the changeover switch element SW1 is turned on. In this manner, an amount of the current flowing through the capacitors C1 and C2 can be stabilized when switching from the low-voltage control to the high-voltage control, and the converter device 10 can be safely driven.

In the description of FIG. 4, a timing for switching on/off of the switching elements Tr1 and Tr2 during the low-voltage control is the zero-cross of the input voltage Vin of the AC power supply 2, but the present disclosure is not limited to this example, and a phase of the input voltage Vin of the AC power supply 2 may be modulated to change the timing at which the switching elements Tr1 and Tr2 are switched.

### (Example of Full Bridgeless Circuit)

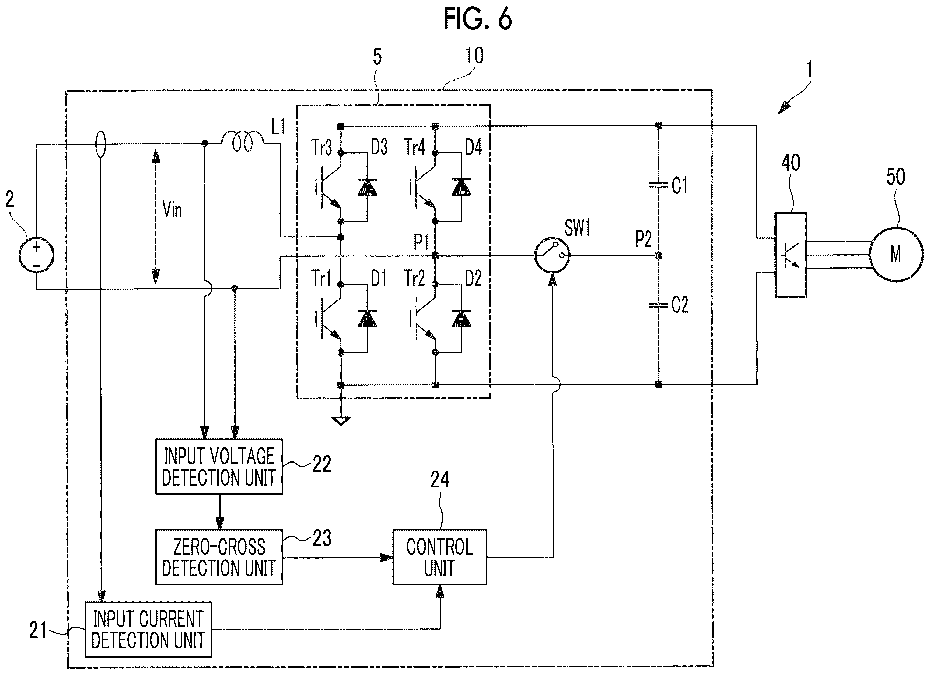

The bridge rectification circuit 5 shown in FIG. 1 has a configuration of a half bridgeless circuit, but the above-described control can also be applied to a full bridgeless circuit further including a switching element (third switching element) Tr3 connected in parallel with the diode D3 and a switching element (fourth switching element) Tr4 connected in parallel with the diode D4. FIG. 6 is a diagram showing a configuration of the motor drive device 1 in a case where the bridge rectification circuit 5 in FIG. 1 is changed to the full bridgeless circuit.

Even in a case where the bridge rectification circuit 5 is the full bridgeless circuit, when the PAM control is executed, the control unit 24 generates the PAM control signal using the carrier frequency having a frequency higher than the frequency of the AC voltage of the AC power supply 2 and controls the on/off of the switching elements Tr1 and Tr2 based on the generated PAM control signal, to boost the inter-terminal voltage between the capacitors C1 and C2. In this case, the control unit 24 may turn off both the switching elements Tr3 and Tr4, or may execute complementary PWM control corresponding to each of the switching elements Tr1 and Tr2.

The control unit 24 performs the low-voltage control in a case where a motor rotation speed is equal to or less than a predetermined rotation speed.

For example, the control unit 24 controls the switching elements Tr2 and Tr3 to be turned on and the switching elements Tr1 and Tr4 to be turned off, in a section in which the voltage output from the AC power supply 2 has a positive polarity. In a case where the switching elements Tr2 and Tr3 are turned on, the current flows to the first terminal of the AC power supply 2 to the reactor L1 → the switching element Tr3 → the capacitor C1, the capacitor C2 → the switching element Tr2 → the second terminal of the AC power supply 2, and thus the capacitors C1 and C2 are charged.

The control unit 24 controls the switching elements Tr1 and Tr4 to be turned on and the switching elements Tr2 and Tr3 to be turned off, in a section in which the voltage output from the AC power supply 2 has a negative polarity. In a case where the switching elements Tr1 and Tr4 are turned on, the current flows to the first terminal of the AC power supply 2 → the switching element Tr4 → the capacitor C1 → the capacitor C2 → the switching element Tr1 → the reactor L1 → the second terminal of the AC power supply 2, and thus the capacitors C1 and C2 are charged.

In the case of the full bridgeless circuit, when the switching elements Tr3 and Tr4 are always turned off, the current flows to the diodes D3 and D4 instead of the switching elements Tr3 and Tr4.

Even in a case where the bridge rectification circuit 5 is the full bridgeless circuit and includes the switching elements Tr3 and Tr4, the control unit 24 switches on/off of the switching elements Tr1 and Tr2 in accordance with the polarity of the voltage output from the AC power supply 2 and executes the PAM control, as in a case where the bridge rectification circuit 5 is the half bridgeless circuit. That is, the PAM control is executed before the changeover switch element SW1 is switched on, to boost the inter-terminal voltage between the capacitors C1 and C2 in advance, so that it is possible to suppress the inrush current flowing to the capacitors C1 and C2 when the changeover switch element SW1 is turned on. When the control unit 24 executes the PAM control, on/off of the switching elements Tr3 and Tr4 may be switched by the complementary PWM control corresponding to the switching elements Tr1 and Tr2.

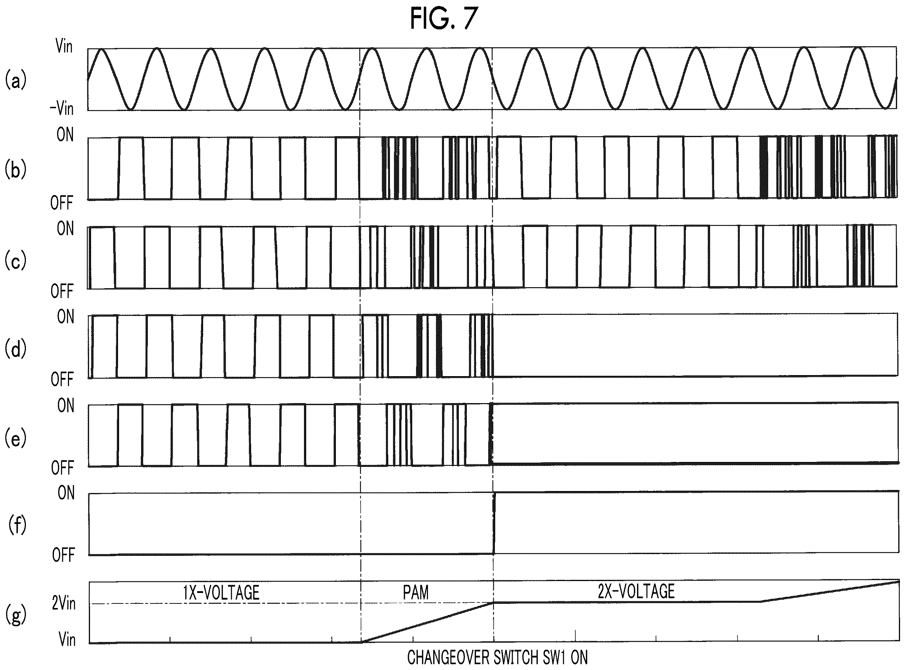

FIG. 7 is a timing chart showing each waveform in a case where the PAM control is executed when switching from the low-voltage control to the high-voltage control in the motor drive device 1 of FIG. 6. (a) of FIG. 7 is a waveform diagram showing the output voltage of the AC power supply 2. (b) of FIG. 7 is a waveform diagram showing the drive state of the switching element Tr1. (c) of FIG. 7 is a waveform diagram showing the drive state of the switching element Tr2. (d) of FIG. 7 is a waveform diagram showing the drive state of the switching element Tr3. (e) of FIG. 7 is a waveform diagram showing the drive state of the switching element Tr4. (f) of FIG. 7 is a waveform diagram showing the drive state of the changeover switch element SW1. (g) of FIG. 7 is a waveform diagram showing the output voltage of the converter device 10.

Even in a case where the bridge rectification circuit 5 is the full bridgeless circuit, the control unit 24 performs the PAM control by alternately switching on/off of the switching elements Tr1 and Tr2, so that the input current output from the AC power supply 2 can be brought close to the period of the AC voltage output from the AC power supply 2, and the harmonic distortion can be made equal to or less than a desired distortion rate.

From (a) to (g) of FIG. 7, during a period in which the output voltage of the converter device 10 is driven at a 1x-voltage (low voltage), the control unit 24 alternately switches on/off of each of the switching elements Tr1, Tr2, Tr3, and Tr4 in accordance with the polarity of the input voltage, and executes the synchronous rectification control of rectifying the current in synchronization with the input voltage.

Next, before the execution of the high-voltage control of setting the inter-terminal voltage between the capacitors C1 and C2 to the DC voltage that is twice the input voltage Vin of the AC power supply 2, that is, during a period before switching on the changeover switch element SW1, the control unit 24 alternately switches on/off of the switching elements Tr1 and Tr2 to perform the PAM control. In this manner, the inter-terminal voltage between the capacitors C1 and C2 is asymptotically boosted, and the inter-terminal voltage between the capacitors C1 and C2 is brought close to the DC voltage that is twice the input voltage Vin of the AC power supply 2. In this case, as shown in (d) and (e) of FIG. 7, the control unit 24 transmits the control signals to the switching elements Tr3 and Tr4 such that the switching elements Tr3 and Tr4 execute the complementary PWM control corresponding to the switching elements Tr1 and Tr2, respectively.

Next, when the inter-terminal voltage between the capacitors C1 and C2 has reached twice the input voltage Vin of the AC power supply 2, the control unit 24 turns off the switching elements Tr1 to Tr4, and switches on the changeover switch element SW1 to execute the high-voltage control. In this case, instead of turning off the switching elements Tr1 to Tr4, the synchronous rectification control may be executed again.

In FIG. 7, after the high-voltage control is executed, the control unit 24 turns off the switching elements Tr3 and Tr4, and alternately switches on/off of the switching elements Tr1 and Tr2 to execute the synchronous rectification control.

The control unit 24 further increases the output voltage of the converter device 10 by similarly executing the PAM control in a state where the changeover switch element SW1 is turned on.

As described above, even in a case where the bridge rectification circuit 5 is the full bridgeless circuit, as in a case where the bridge rectification circuit 5 is the half bridgeless circuit, the control unit 24 can perform the PAM control by alternately switching on/off of the switching elements Tr1 and Tr2 during a period before the changeover switch element SW1 is switched on. Therefore, even in a case where the bridge rectification circuit 5 is the full bridgeless circuit, it is possible to suppress the inrush current generated in the converter device 10 when the changeover switch element SW1 is turned on.

In the above-described example, the control unit 24 asymptotically boosts the inter-terminal voltage between the capacitors C1 and C2, and interrupts the PAM control to turn on the changeover switch element SW1 when the inter-terminal voltage between the capacitors C1 and C2 has reached twice the input voltage Vin of the AC power supply 2, but the timing at which the changeover switch element SW1 is switched on is not limited to this example. For example, the control unit 24 may switch on the changeover switch element SW1 in a case where the inter-terminal voltage between the capacitors C1 and C2 is equal to or greater than a predetermined threshold value set in the vicinity of the inter-terminal voltage of the high-voltage control. The predetermined threshold value need only be determined based on a drive condition of the converter device 10 or a withstand voltage of the electronic component included in the converter device 10.

### [Second Embodiment]

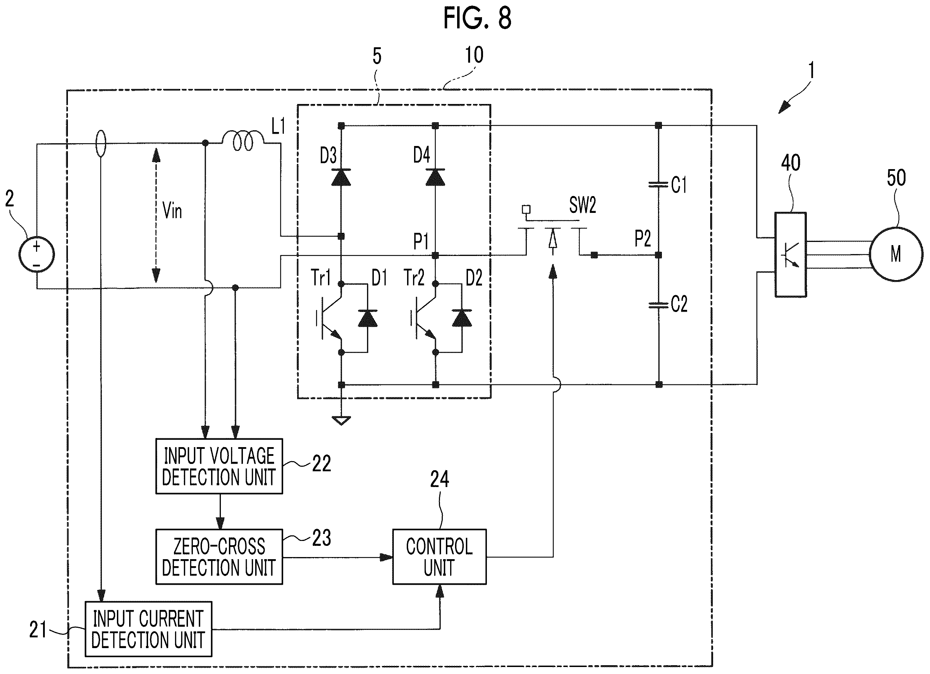

FIG. 8 is a diagram showing a configuration of the motor drive device 1 in a case where the changeover switch element is changed to the power transistor in FIG. 1.

In the first embodiment described above, a surge current at the time of the switching of the changeover switch element SW1 is suppressed by performing the PAM control of the switching elements Tr1 and Tr2, but the present embodiment is different from the first embodiment described above in that the inter-terminal voltage between the capacitors C1 and C2 is asymptotically boosted by performing the PWM control of a changeover switch element SW2. In the present embodiment, the above-described changeover switch element SW1 is changed to the changeover switch element SW2 that is a power transistor.

Hereinafter, since the same reference numerals will be assigned to points common to the first embodiment described above, description thereof will be omitted, and main differences will be described.

Similarly to the changeover switch element SW1, the changeover switch element SW2 has a first terminal connected to the connection point P1 between the switching element Tr2 and the diode D4 that are connected in series with each other, and a second terminal connected to the midpoint P2 between the capacitor C1 and the capacitor C2. The changeover switch element SW2 is in either an on or off state by input of the control signal from the control unit 24. The changeover switch element SW2 is, for example, the power transistor such as a MOSFET.

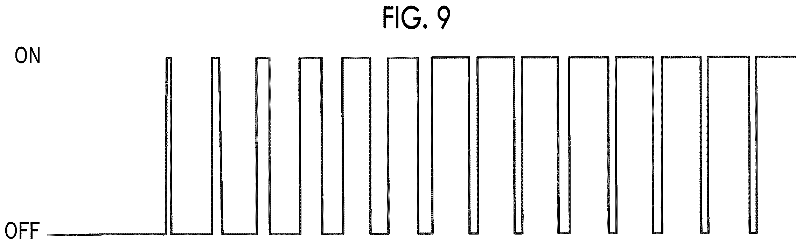

As shown in FIG. 9, the control unit 24 performs the PWM control of the changeover switch element SW2 in accordance with a duty ratio that asymptotically increases during a period before the control unit 24 switches on the changeover switch element SW2 to execute the high-voltage control. The control unit 24 can gradually bring the inter-terminal voltage between the capacitors C1 and C2 close to the inter-terminal voltage of the high-voltage control by asymptotically increasing the duty ratio of the PWM signal of the changeover switch element SW2. Then, in a case where the high-voltage control is executed, the inrush current generated in the converter device 10 when the changeover switch element SW2 is turned on can be suppressed.

Specifically, during the period in which the output voltage of the converter device 10 is driven at a 1x-voltage (low voltage), the control unit 24 alternately switches on/off of each of the switching elements Tr1 and Tr2 in accordance with the polarity of the input voltage, and executes the synchronous rectification control of rectifying the current in synchronization with the input voltage.

Next, before the high-voltage control of setting the inter-terminal voltage between the capacitors C1 and C2 to the DC voltage that is twice the input voltage Vin of the AC power supply 2 is executed, that is, during a period before the switching on the changeover switch element SW2, the control unit 24 asymptotically increases the duty ratio of the PWM signal of the changeover switch element SW2. In this manner, the potential difference between both terminals of the changeover switch element SW2 is gradually reduced, and the inter-terminal voltage between the capacitors C1 and C2 is brought close to the DC voltage that is twice the input voltage Vin of the AC power supply 2.

When the switching element Tr2 is turned on when the changeover switch element SW2 is turned on, a reverse current may be generated, which may reduce the durability and the lifetime of the electronic component. Therefore, the control unit 24 executes the complementary PWM control in which the switching element Tr2 is always turned off when the changeover switch element SW2 is turned on, or the switching element Tr2 is turned off only when the changeover switch element SW2 is turned off.

Next, when the inter-terminal voltage between the capacitors C1 and C2 has reached twice the input voltage Vin of the AC power supply 2, the control unit 24 switches on the changeover switch element SW2 at the duty ratio of 100% to execute the high-voltage control. For example, a known method need only be adopted as appropriate, such as providing a voltage sensor or a detection resistor, for detecting the inter-terminal voltage between the capacitors C1 and C2.

After executing the high-voltage control, the control unit 24 turns off the switching element Tr2, alternately switches on/off of the switching element Tr1, and executes the synchronous rectification control.

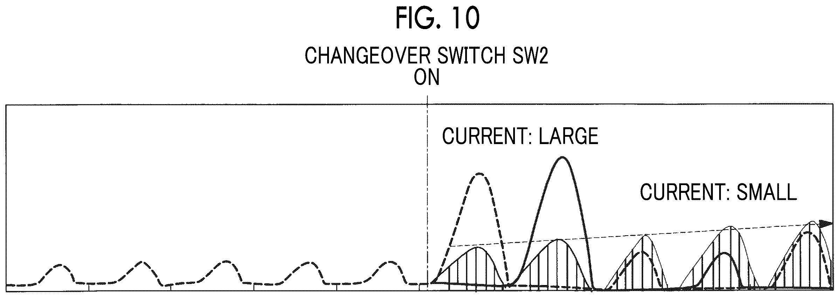

FIG. 10 is a comparison diagram of the inrush current generated in the converter device 10 when the changeover switch element SW1 is turned on. In FIG. 10, a thick line indicates the current flowing through the capacitor C1 in a case where the duty ratio of the changeover switch element SW2 is not asymptotically increased before the changeover switch element SW2 is switched on at the duty ratio of 100%. A dashed line indicates the current flowing through the capacitor C2 in a case where the duty ratio of the changeover switch element SW2 is not asymptotically increased before the changeover switch element SW2 is switched on at the duty ratio of 100%. A thin line indicates the current flowing through the capacitors C1 and C2 in a case where the duty ratio of the changeover switch element SW2 is asymptotically increased before the changeover switch element SW2 is switched on at the duty ratio of 100%. In FIG. 10, a perpendicular line drawn at the amplitude of the thin line indicates that on/off of the changeover switch element SW2 is switched.

From FIG. 10, when the dashed line, the thick line, and the thin line after the changeover switch element SW2 is switched on at the duty ratio of 100% are compared, an amplitude of the current of the thin line is smaller than an amplitude of the each current of the dashed line and the thick line. This is because the duty ratio of the changeover switch element SW2 is asymptotically increased before the changeover switch element SW2 is switched on at the duty ratio of 100%, so that the generation of the inrush current is suppressed. That is, before switching on the changeover switch element SW2, the duty ratio of the changeover switch element SW2 is asymptotically increased, and the potential difference between both terminals of the changeover switch element SW2 is gradually reduced, so that it is possible to suppress the inrush current flowing to the capacitors C1 and C2 when switching on the changeover switch element SW1.

The amplitude of the second current represented by the dashed line and the thick line after the changeover switch element SW1 is switched on at the duty ratio of 100% is temporarily reduced due to the influence of the inrush current. On the other hand, the amplitudes of the third and fourth currents of the thin line are not reduced and are stable since the influence of the inrush current is suppressed.

Therefore, by suppressing the inrush current when the control unit 24 switches on the changeover switch element SW1, an amount of the current flowing through the capacitors C1 and C2 can be stabilized when switching from the low-voltage control to the high-voltage control, and the converter device 10 can be safely driven.

In the above-described example, the control unit 24 asymptotically increases the duty ratio of the changeover switch element SW2 and switches on the changeover switch element SW2 when the inter-terminal voltage between the capacitors C1 and C2 has reached twice the input voltage Vin of the AC power supply 2, but the timing at which the changeover switch element SW2 is switched on is not limited to this example. For example, in a case where the inter-terminal voltage between the capacitors C1 and C2 is equal to or greater than the predetermined threshold value set in the vicinity of the inter-terminal voltage of the high-voltage control, the control unit 24 may switch on the changeover switch element SW2 at the duty ratio of 100%. Not only in a case where the inter-terminal voltage between the capacitors C1 and C2 is equal to or greater than the predetermined threshold value set in the vicinity of the inter-terminal voltage of the high-voltage control, but also in a case where the duty ratio increases to a predetermined value, the changeover switch element SW2 may be switched on at the duty ratio of 100%. The predetermined threshold value or the predetermined value of the duty ratio need only be determined based on the drive condition of the converter device 10 or the withstand voltage of the electronic component included in the converter device 10.

In the above-described example, the example has been shown in which the bridge rectification circuit 5 is the half bridgeless circuit, but the present disclosure is not limited to this example, and the bridge rectification circuit 5 may be the full bridgeless circuit. In this case, the control unit 24 may perform PWM control of each of the switching elements Tr3 and Tr4 shown in FIG. 6 instead of performing the PWM control of the changeover switch element SW2, to sequentially boost the inter-terminal voltage between the capacitors C1 and C2 and bring the inter-terminal voltage between the capacitors C1 and C2 close to the DC voltage that is twice the input voltage Vin of the AC power supply 2.

Some embodiments of the present disclosure provide the following effects.

When switching from the low-voltage control to the high-voltage control, the control unit 24 generates the boost control signal using the carrier frequency having a frequency higher than the frequency of the AC voltage of the AC power supply 2, and controls on/off of the switching elements Tr1 and Tr2 using the generated boost control signal. In this manner, the inter-terminal voltage between the capacitors C1 and C2 is boosted. Then, the control unit 24 switches on the changeover switch element SW1 after boosting the inter-terminal voltage between the capacitors C1 and C2, so that it is possible to suppress the inrush current flowing to the capacitors C1 and C2 when the changeover switch element SW1 is turned on. As a result, it is possible to suppress damage to the electronic component included in the converter device 10 and to safely drive the converter device 10.

According to another embodiment, the control unit 24 uses the changeover switch element SW2 that is the power transistor instead of the changeover switch element SW1, and outputs the PWM signal to the changeover switch element SW2 to switch on/off of the changeover switch element SW2 when switching from the low-voltage control to the high-voltage control. In this case, the duty ratio of the PWM signal of the changeover switch element SW2 is asymptotically increased, so that the potential difference between both terminals of the changeover switch element SW2 can be gradually reduced. In this manner, when switching from the low-voltage control to the high-voltage control, it is possible to suppress the inrush current flowing to the capacitors C1 and C2. As a result, it is possible to suppress damage to the electronic component included in the converter device 10 and to safely drive the converter device 10.

The control unit 24 switches on the changeover switch element SW1 in a case where the output voltage of the converter device 10 is equal to or greater than a predetermined threshold value, or switches on the changeover switch element SW2 in a case where the duty ratio of the PWM signal of the changeover switch element SW2 is increased to a predetermined value. Since the predetermined threshold value or the predetermined value of the duty ratio is set based on the value in the vicinity of the inter-terminal voltage of the high-voltage control, the control unit 24 switches on the changeover switch element in this state, so that it is possible to suppress the inrush current from flowing through the capacitors C1 and C2. As a result, the converter device 10 can be safely driven.

Although the present disclosure has been described above with reference to the embodiments, the technical scope of the present disclosure is not limited to the embodiments described above. Various modifications or improvements can be made to the embodiments described above within the scope not departing from the concept of the present disclosure, and forms to which the modifications or the improvements are made are also included in the technical scope of the present disclosure. The embodiments described above may be combined as appropriate.

### (Supplementary Notes)

The converter device and the motor drive device equipped with the same described in the embodiments described above are understood as follows, for example.

A first aspect of the present disclosure relates to a converter device including: a bridge rectification circuit (5) that rectifies AC power supplied from an AC power supply (2) and that includes a first arm part (arm1) including a first switching element (Tr1) and a rectification element (D3) or a third switching element (Tr3) connected in series with the first switching element, and a second arm part (arm2) including a second switching element (Tr2) and a rectification element (D4) or a fourth switching element (Tr4) connected in series with the second switching element; a plurality of capacitors (C1, C2) connected in parallel with an output side of the bridge rectification circuit and connected in series with each other; a changeover switch element (SW1) having a first terminal connected to a connection point (P1) between a plurality of the switching elements that are connected in series with each other or a connection point (P1) between the switching element and the rectification element that are connected in series with each other, and a second terminal connected to a midpoint (P2) between the plurality of capacitors; and a control unit (24) that controls on/off of the changeover switch element to switch between low-voltage control of outputting a low voltage and high-voltage control of outputting a high voltage, in which the control unit generates a boost control signal using a carrier frequency having a frequency higher than a frequency of an AC voltage of the AC power supply, controls on/off of the first switching element and the second switching element based on the generated boost control signal to boost an inter-terminal voltage between the capacitors, and then switches on the changeover switch element.

With the converter device of the present disclosure, when switching from the low-voltage control to the high-voltage control, the control unit generates the boost control signal using the carrier frequency having a frequency higher than the frequency of the AC voltage of the AC power supply, and controls on/off of the first switching element and the second switching element using the generated boost control signal. In other words, the first switching element and the second switching element are subjected to the PWM control. In this manner, the changeover switch element is switched on after the inter-terminal voltage between the capacitor is boosted. In this way, by boosting the output voltage of the converter device before switching on the changeover switch element, it is possible to suppress the inrush current flowing to the capacitor when the changeover switch element is switched on. As a result, it is possible to suppress damage to the electronic component included in the converter device and to safely drive the converter device.

A second aspect of the present disclosure relates to a converter device including: a bridge rectification circuit (5) that rectifies AC power supplied from an AC power supply (2) and that includes a first arm part (arm1) including a first switching element (Tr1) and a rectification element (D3) or a third switching element (Tr3) connected in series with the first switching element, and a second arm part (arm1) including a second switching element (Tr2) and a rectification element (D4) or a fourth switching element (Tr4) connected in series with the second switching element; a plurality of capacitors (C1, C2) connected in parallel with an output side of the bridge rectification circuit and are connected in series with each other; a changeover switch element (SW2) having a first terminal connected to a connection point (P1) between a plurality of the switching elements that are connected in series with each other or a connection point (P1) between the switching element and the rectification element that are connected in series with each other, and a second terminal connected to a midpoint (P2) between the plurality of capacitors; and a control unit (24) that controls on/off of the changeover switch element to switch between low-voltage control of outputting a low voltage and high-voltage control of outputting a high voltage, in which, when the control unit switches from the low-voltage control to the high-voltage control, the control unit performs PWM control of the changeover switch element in accordance with a duty ratio that asymptotically increases, and then switches on the changeover switch element.

With the converter device of the present disclosure, on/off of the changeover switch element is switched using the PWM signal output from the control unit when switching from the low-voltage control to the high-voltage control. In this case, since the duty ratio of the PWM signal asymptotically increases, the potential difference between both terminals of the changeover switch element can be gradually reduced. In this manner, when switching from the low-voltage control to the high-voltage control, it is possible to suppress the inrush current flowing to the capacitors. As a result, it is possible to suppress damage to the electronic component included in the converter device and to safely drive the converter device.

A third aspect of the present disclosure relates to the converter device according to the first aspect, in which the control unit switches on the changeover switch element in a case where the inter-terminal voltage is equal to or greater than a predetermined threshold value set in a vicinity of an inter-terminal voltage of the high-voltage control.

With the converter device of the present disclosure, the control unit switches on the changeover switch element in a case where the inter-terminal voltage is equal to or greater than the predetermined threshold value. Since the predetermined threshold value is set in the vicinity of the inter-terminal voltage of the high-voltage control, the control unit switches on the changeover switch element in this state, so that it is possible to suppress the inrush current flowing to the capacitors. As a result, the converter device can be safely driven.

A fourth aspect of the present disclosure relates to the converter device according to the second aspect, in which the control unit switches on the changeover switch element in a case where the duty ratio is increased to a predetermined value.

With the converter device of the present disclosure, the control unit switches on the changeover switch element in a case where the duty ratio is increased to the predetermined value. Since the predetermined value is set to the value at which the potential difference between the both terminals of the changeover switch element is in the vicinity of the inter-terminal voltage of the high-voltage control, the control unit switches on the changeover switch element in this state, so that it is possible to suppress the inrush current flowing to the capacitors. As a result, the converter device can be safely driven.

A fifth aspect of the present disclosure relates to a motor drive device including: the converter device according to any one of the first to fourth aspects.

### Reference Signs List

1: motor drive device
2: AC power supply
5: bridge rectification circuit
10: converter device
21: input current detection unit
22: input voltage detection unit
24: control unit
40: inverter device
50: motor
arm1: first arm part
arm2: second arm part
C1, C2: capacitor
D1 to D4: diode
L1: reactor
P1: connection point
P2: midpoint
Tr1 to Tr4: switching element

## Claims

1. A converter device comprising:
a bridge rectification circuit that rectifies AC power supplied from an AC power supply and that includes a first arm part including a first switching element and a rectification element or a third switching element connected in series with the first switching element, and a second arm part including a second switching element and a rectification element or a fourth switching element connected in series with the second switching element;
a plurality of capacitors connected in parallel with an output side of the bridge rectification circuit and connected in series with each other;
a changeover switch element having a first terminal connected to a connection point between a plurality of the switching elements that are connected in series with each other or a connection point between the switching element and the rectification element that are connected in series with each other, and a second terminal connected to a midpoint between the plurality of capacitors; and
a control unit that controls on/off of the changeover switch element to switch between low-voltage control of outputting a low voltage and high-voltage control of outputting a high voltage,
wherein the control unit generates a boost control signal using a carrier frequency having a frequency higher than a frequency of an AC voltage of the AC power supply, controls on/off of the first switching element and the second switching element based on the generated boost control signal to boost an inter-terminal voltage between the capacitors, and then switches on the changeover switch element.

2. A converter device comprising:
a bridge rectification circuit that rectifies AC power supplied from an AC power supply and that includes a first arm part including a first switching element and a rectification element or a third switching element connected in series with the first switching element, and a second arm part including a second switching element and a rectification element or a fourth switching element connected in series with the second switching element;
a plurality of capacitors connected in parallel with an output side of the bridge rectification circuit and are connected in series with each other;
a changeover switch element having a first terminal connected to a connection point between a plurality of the switching elements that are connected in series with each other or a connection point between the switching element and the rectification element that are connected in series with each other, and a second terminal connected to a midpoint between the plurality of capacitors; and
a control unit that controls on/off of the changeover switch element to switch between low-voltage control of outputting a low voltage and high-voltage control of outputting a high voltage,
wherein, when the control unit switches from the low-voltage control to the high-voltage control, the control unit performs PWM control of the changeover switch element in accordance with a duty ratio that asymptotically increases, and then switches on the changeover switch element.

3. The converter device according to Claim 1,
wherein the control unit switches on the changeover switch element in a case where the inter-terminal voltage is equal to or greater than a predetermined threshold value set in a vicinity of an inter-terminal voltage of the high-voltage control.

4. The converter device according to Claim 2,
wherein the control unit switches on the changeover switch element in a case where the duty ratio is increased to a predetermined value.

5. A motor drive device comprising:
the converter device according to Claim 1.
